Europäisches Patentamt

European Patent Office

Office européen des brevets

(19)

(11) Veröffentlichungsnummer : **0 451 566 B1**

## (12) EUROPÄISCHE PATENTSCHRIFT

(45) Veröffentlichungstag der Patentschrift :
25.05.94 Patentblatt 94/21

(51) Int. Cl.[5] : **G01N 30/12**, G01N 30/26, G01N 30/16

(21) Anmeldenummer : 91104387.5

(22) Anmeldetag : 21.03.91

(54) **Verfahren und Vorrichtung zur gaschromatographischen Trennung.**

(30) Priorität : 07.04.90 DE 4011350
27.08.90 DE 4027009

(43) Veröffentlichungstag der Anmeldung :
16.10.91 Patentblatt 91/42

(45) Bekanntmachung des Hinweises auf die
Patenterteilung :
25.05.94 Patentblatt 94/21

(84) Benannte Vertragsstaaten :
CH DE ES FR GB IT LI NL

(56) Entgegenhaltungen :
EP-A- 0 140 020
EP-A- 0 292 612
US-A- 3 859 209

(56) Entgegenhaltungen :
JOURNAL OF HIGH RESOLUTION CHROMA-
TOGRAPHY AND CHROMATOGRAPHY Bd. 9,
Nr. 9, Februar 1986, HEIDELBERG DE Seiten
95 - 101 GROB ET AL. 'concurrent solvent
evaporation for on-line coupled hplc-gc'
TRAC, TRENDS IN ANALYTICAL CHEMISTRY.
Bd. 8, Nr. 5, Mai 1989, CAMBRIDGE GB Seiten
162 - 166 GROB 'on-line coupled high-performance liquid chromatography-gas chromatography'

(73) Patentinhaber : Gerstel, Eberhard
Aktienstrasse 232-234
D-45473 Mülheim an der Ruhr (DE)

(72) Erfinder : Gerstel, Eberhard
Aktienstrasse 232-234
D-45473 Mülheim an der Ruhr (DE)

(74) Vertreter : Sparing Röhl Henseler
Patentanwälte
Postfach 14 04 43
D-40074 Düsseldorf (DE)

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren und eine Vorrichtung zur gaschromatographischen Trennung von Substanzen nach dem Oberbegriff des Anspruchs 1 bzw. 16.

Aus der EP-A-0 292 612 ist ein Gaschromatograph sowie ein Verfahren zum Trennen von Substanzen bekannt, wobei eine Trägergaszufuhr zur druckgeregelten Zufuhr eines Trägergasstromes, eine Probenaufgabeeinrichtung mit Vortrennung, eine Trennsäule, an die sich gegebenenfalls ein Detektor anschließt, und ein zwischen der Probenaufgabeeinrichtung und der Trennsäule angeordnetes Verzweigungsstück mit einer Drosselstelle vorgesehen sind. Das Verzweigungsstück weist zusätzlich einen zu einer schaltbaren Ventileinrichtung führenden Ausgang, der probenaufgabeseitig zur Drosselstelle angeordnet ist, und eine Zuführleitung für einen geregelten Hilfsgasstrom auf, die trennsäulenseitig zur Drosselstelle angeordnet ist. Die Probenaufgabeeinrichtung ist beheizbar, um die Vortrennung zu bewirken. Mit diesem Gaschromatographen lassen sich zwar Schnitte durch Ausblendung bestimmter Chromatogrammteile, die über einen an das Verzweigungsstück angeschlossenen Kontrolldetektor bestimmbar sind, vornehmen, jedoch lassen sich hierdurch nur über zusätzliche Fallen, deren Inhalt später erneut dem Trennvorgang zu unterwerfen ist, Substanzen anreichern. Ansonsten geht die Probe einschließlich des Lösungsmittels auf die Trennsäule, die hierdurch relativ stark belastet wird, wodurch ihre Trennschärfe beeinträchtigt wird.

Ferner ist in der deutschen Anmeldung P 39 13 738.4 ein Verfahren vorgeschlagen worden, bei dem das Lösungsmittel durch Abführen mittels eines Trägergasstroms bei der Probenaufgabe ausgeblendet wird, während die zu untersuchenden Substanzen an einer vor der Trennsäule befindlichen Phase zurückgehalten werden, um in einem weiteren Betriebszustand durch Aufheizen von der Phase getrennt und in ein Trennsäulensystem eingeführt zu werden. Hierdurch wird es möglich eine mehrfache Probenaufgabe vorzunehmen und dadurch zu untersuchende Substanzen anzureichern. Jedoch wäre dies für die Untersuchung von Spuren in Lösungsmitteln, beispielsweise in Wasser, sehr zeitaufwendig und schwierig, wenn nicht gar praktisch undurchführbar, da hierbei große Mengen an Lösungsmittel aufgegeben werden müssen, bis eine ausreichende Spurenanreicherung erreicht werden kann. Bezüglich des Lösungsmittels kann dann angesichts der großen Menge praktisch keine vollständige Ausblendung gelingen.

Aufgabe der Erfindung ist es, ein Verfahren und eine Vorrichtung nach dem Oberbegriff des Anspruchs 1 bzw. 16 zu schaffen, das es ermöglicht, das Lösungsmittel auszublenden und gleichzeitig insbesondere nur spurenartig in dem Lösungsmittel vorhandene, zu untersuchende Substanzen in möglichst kurzer Zeit und möglichst guter Ausbeute anzureichern, um sie nach der Probenaufgabe auf die Trennsäule zu geben.

Diese Aufgabe wird entsprechend dem kennzeichnenden Teil des Anspruchs 1 bzw. 16 gelöst.

Um aus größeren Mengen an Probenmaterial mit einem sehr hohen Lösungsmittelanteil zu untersuchende Substanzen sammeln und auf eine Trennsäule geben zu können, während das Lösungsmittel ausgeblendet wird, wird wenigstens eine der drei Größen - Dosiergeschwindigkeit des Probenmaterials, Temperatur im Verdampferrohr und das Verdampferrohr durchströmende Spülgasmenge pro Zeiteinheit - in Abhängigkeit von der oder den anderen derart geregelt, daß noch sämtliches Lösungsmittel im Verdampferrohr verdampft und mit dem Spülgasstrom abgeführt wird, d.h. daß die Regelung derart vorgenommen wird, daß entsprechend den ansonsten vorliegenden Bedingungen eine maximale Verdampfungsgeschwindigkeit für das Lösungsmittel und Abführung des hierbei entstehenden Lösungsmitteldampfes erzielt wird, so daß sich eine zeitlich möglichst optimale Aufgabe durch praktisch maximale Lösungsmitteldampfbelastung des Spülgases ergibt. Hierbei ist eine relativ hohe Temperatur im Verdampferrohr für die Lösungsmittelverdampfung vorteilhaft, allerdings werden dann im allgemeinen zurückzuhaltende Substanzen in größerem Maße als bei tieferen Temperaturen mitgerissen, wobei sich letztere als aufgabezeitverlängernd auswirken. Hier ist ein zweckmäßiger Kompromiß entsprechend den jeweiligen Gegebenheiten durch entsprechende Vorgaben von Sollwerten für bestimmte Größen, etwa die Temperatur im Verdampferrohr etc., zu treffen.

Selbst in sehr großen Mengen aufgegebenes Lösungsmittel läßt sich praktisch gänzlich ausblenden, während gleichzeitig zu untersuchende Substanzen festgehalten und damit angereichert werden. Spuren im ppm-Bereich und darunter lassen sich hierdurch in genügender Menge anreichern. Die Aufgabe des Probenmaterials erfolgt kontinuierlich in praktisch optimaler Zeit derart, daß sämtliches Lösungsmittel im Verdampferrohr verdampft und mit dem Trägergasstrom abgeführt wird, indem fortwährend ein für die Verdampfung des Lösungsmittels genügendes Volumen zur Verfügung gestellt wird. Durch entsprechendes Erwärmen wird nach dem Ausblenden des Lösungsmittels der zu untersuchende Anteil der Trennsäule zugeführt, deren Belastung durch den Wegfall des Lösungsmittels somit entsprechend herabgesetzt ist, wodurch sich eine entsprechend hohe Trennschärfe ergibt.

Die zu untersuchenden Substanzen werden in dem Verdampferrohr infolge einer genügend großen Differenz zwischen dem Siedepunkt des Lösungsmittels und dem oder den Siedepunkten der zurückzuhaltenden Substanzen - gegebenenfalls bei entsprechender Kühlung des Verdampferrohrs derart, daß das Lösungsmittel verdampft, aber die zurückzuhaltenden Substanzen sich niederschlagen - oder beispielsweise über eine selektive Packung im Verdampferrohr - etwa durch polare Adhäsion o.dgl. - festgehalten und damit angereichert.

Weitere Ausgestaltungen der Erfindung sind der nachfolgenden Beschreibung und den abhängigen Ansprüchen zu entnehmen.

Die Erfindung wird nachstehend anhand der beigefügten Abbildungen näher erläutert.

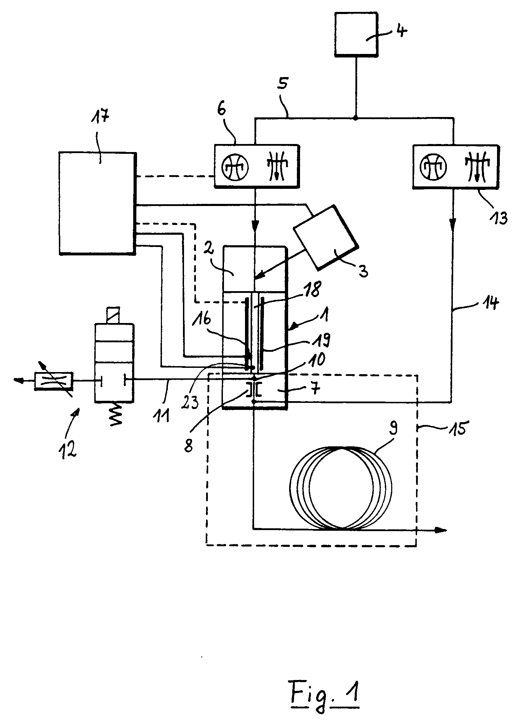

Fig. 1 zeigt schematisch ein Ausführungsbeispiel eines Gaschromatographen.

Fig. 2 zeigt ein Diagramm bezüglich der maximalen Dosiergeschwindigkeit des Probenmaterials in Abhängigkeit von der Temperatur und der Trägergasdurchflußmenge.

Fig. 3 zeigt eine Ausführungsform eines Verdampferrohrs.

Fig. 4 zeigt schematisch eine Dosiereinrichtung für Probenmaterial.

Der dargestellte Gaschromatograph umfaßt eine Probenaufgabeeinrichtung 1, die mit einem Aufgabekopf 2 versehen ist, der mit einer beispielsweise eine Injektionsnadel aufweisenden Dosiereinrichtung 3 gekoppelt ist. Bei der Probenaufgabeeinrichtung 1 handelt es sich beispielsweise um eine Kaltaufgabeeinrichtung, wie sie in der DE-PS 34 00 458 beschrieben ist, während als Aufgabekopf 2 vorzugsweise eine Ausführungsform infrage kommt, wie sie in dem DE-GM 87 15 782 beschrieben ist.

Eine Spül- und Trägergasquelle 4 (wenn Spül- und Trägergas nicht identisch ist, sind entsprechend zwei Gasquellen vorzusehen) ist vorgesehen, die über eine Gasleitung 5 und einen Strömungsregler 6 mit dem Aufgabekopf 2 verbunden ist.

Die Probenaufgabeeinrichtung 1 mündet in einem Verzweigungsstück 7, das eine durch eine Drossel 8 verengte, zu einer kapillaren Trennsäule 9 führende Durchgangsbohrung 10 aufweist. In Strömungsrichtung des Spülgases vor der Drossel 8 führt von der Durchgangsbohrung 10 eine Abführleitung 11 ab, die zu einer Ventileinrichtung 12, etwa bestehend aus einem Magnet- und einem Nadelventil, führt.

In Strömungsrichtung des Spülgases nach der Drossel 8 mündet eine über einen Strömungsregler 13 mit der Spül- und Trägergasquelle 4 verbundene Hilfsgasleitung 14 für einen Hilfsgasstrom.

Die gaschromatographische Trennsäule 9 befindet sich ebenso wie das Verzweigungsstück 7 in einem Ofen 15, dessen Temperatur regelbar ist.

In der Probenaufgabeeinrichtung 1 wird die Temperatur des zu verarbeitenden Materials mittels eines Temperaturfühlers 16 gemessen. Der Temperaturfühler 16 ist mit einem beispielsweise einen Mikroprozessor umfassenden Regler 17 verbunden, der seinerseits entsprechend den empfangenen Meßwerten die Injektionsgeschwindigkeit der Dosiereinrichtung 3 steuert.

Die Probenaufgabeeinrichtung 1 besitzt ein Verdampferrohr 18, das mittels einer Kühl- und Heizeinrichtung 19 (z.B. Flüssiggas- (flüssiges $CO_2$, $N_2$ o.dgl.) oder Peltierelementkühlung und Widerstandsheizung) kühlbar und beheizbar ist sowie von dem Spülgas und dem aufgegebenen Probenmaterial durchströmt wird. Dieses Verdampferrohr 18 dient zum Zurückhalten von zu untersuchenden Substanzen.

Während der Probenaufgabe, bei der die Trennsäule 9 kalt, gegebenenfalls über die Kühl- und Heizeinrichtung 19 gekühlt ist, strömt ein relativ starker Spülgasstrom über die Gasleitung 5 durch die Probenaufgabeeinrichtung 1. In den durch die Probenaufgabeeinrichtung 1 strömenden Spülgasstrom wird durch die Dosiereinrichtung 3 das Probenmaterial derart zudosiert, daß das gesamte Lösungsmittel des Probenmaterials verdampfen und mit dem Spülgasstrom abgeführt werden kann. Das Spülgas mit dem dampfförmigen Lösungsmittel wird über die Abführleitung 11 abgeleitet, da die Drossel 8 pneumatisch durch den Gasstrom der Hilfsgasleitung 14 verschlossen ist. Die Probenaufgabe erfolgt kontinuierlich über einen genügend langen Zeitraum, der derart bemessen ist, daß sich eine zu ihrem Nachweis und ihrer Identifizierung genügende Menge an zu untersuchenden Substanzen in dem Verdampferrohr 18 ansammelt. Hierbei kann eine Probenaufgabemenge in der Größenordnung von mehreren Millilitern o.dgl. eingesetzt werden.

Die Steuerung der Dosiermenge/Zeiteinheit der Dosiereinrichtung erfolgt durch den Regler 17 entsprechend den Meßwerten des Temperaturfühlers 16 und der durch den Strömungsregler 6 eingestellten Spülgasdurchflußmenge. Für den statischen Zustand gilt, wenn man ein Idealverhalten des Lösungsmitteldampfes voraussetzt, die Formel:

$$V_G = \frac{V_L d}{M} \cdot \frac{RT}{p_j}$$

wobei $V_G$ das Volumen des gesättigten Dampfes, $V_L$ das Volumen der verdampften Flüssigkeit, d die Dichte der verdampften Flüssigkeit, M deren Molgewicht, R die Gaskonstante, $p_j$ der Partialdruck und T die Temperatur ist. Der Partialdruck $p_j$ ist von der Temperatur T und den Stoffdaten abhängig. Hierbei wird das Volumen des gesättigten Dampfes durch das Volumen des Trägergases bestimmt, das pro Zeiteinheit durch das Verdampferrohr 18 strömt, wodurch sich entsprechend der Temperatur die Menge des verdampfbaren Volumens an Flüssigkeit pro Zeiteinheit ergibt, da Dichte und Molekulargewicht des Lösungsmittels bekannt sind. Wenn man davon ausgeht, daß das aus dem Verdampferrohr 18 austretende Spülgas mit Lösungsmitteldampf gesättigt ist, ergibt sich

als maximale Dosiergeschwindigkeit $v_{max}$ für das Probenmaterial:

$$v_{max} = \frac{p_o}{p_i} \cdot \frac{Mp_j}{dRT_o} \cdot v_{t,o},$$

wobei $p_o/p_i$ das Auslaß-/Einlaßdruckverhältnis am Verdampferrohr 18, $T_o$ die Temperatur am Auslaß des Verdampferrohrs 18 und $v_{t,o}$ die Gesamtgasdurchflußrate am Auslaß des Verdampferrohrs 18 ist. Die Spülgasdurchflußmenge und damit die Gesamtgasdurchflußrate wird durch den Strömungsregler 6 bestimmt. Der Einlaßdruck wird von der Spülgasquelle 4 bzw. einem zugehörigen Druckminderventil bestimmt. Der Auslaßdruck ist der Einlaßdruck plus Partialdruck des Lösungsmittels. Dementsprechend kann auf die maximale Dosiergeschwindigkeit $v_{max}$ bzw., falls diese vorgegeben wird, auf eine andere Größe, etwa Spülgasmenge pro Zeiteinheit, geregelt werden, während die Temperatur im allgemeinen entsprechend Zweckmäßigkeitsbetrachtungen vorgegeben wird.

Dementsprechend kann über die Temperatur die Dosiergeschwindigkeit derart geregelt werden, daß sämtliches Lösungsmittel in praktisch der kürzesten hierfür benötigten Zeit verdampft und über die Abführleitung 11 ausgeblendet werden kann, wobei sich große Mengen an Probenmaterial für ein Chromatogramm kontinuierlich verarbeiten lassen. Die zu untersuchenden Substanzen - soweit es sich um Substanzen handelt, die bei der verwendeten Betriebstemperatur des Verdampferrohrs 18 im Gegensatz zum Lösungsmittel nicht oder nicht wesentlich verdampfen und damit nicht mit dem Lösungsmittel abgeführt werden - werden im Verdampferrohr 18 zurückgehalten und angereichert.

Zum Erstellen eines Chromatogramms wird der Säulenvordruck des Trägergases über den Strömungsregler 6 und die Ventileinrichtung 12 eingestellt, während die Drossel 8 durch Wegfall des Hilfsgasstroms geöffnet wird, und die Trennsäule 9 erwärmt. Durch Erhitzen des Verdampferrohrs 18 werden die zu untersuchenden Substanzen verdampft und durch den Trägergasstrom in die Trennsäule 9 transportiert und entsprechend getrennt, um später analysiert und/oder gesplittet und/oder gesammelt zu werden.

Ein derartiger Gaschromatograph erlaubt das Analysieren von sehr geringen Spuren in Lösungsmitteln, z.B. Verunreinigungen im ppm-Bereich oder darunter, wobei große Probenmengen in relativ kurzer Zeit aufgegebenen werden können.

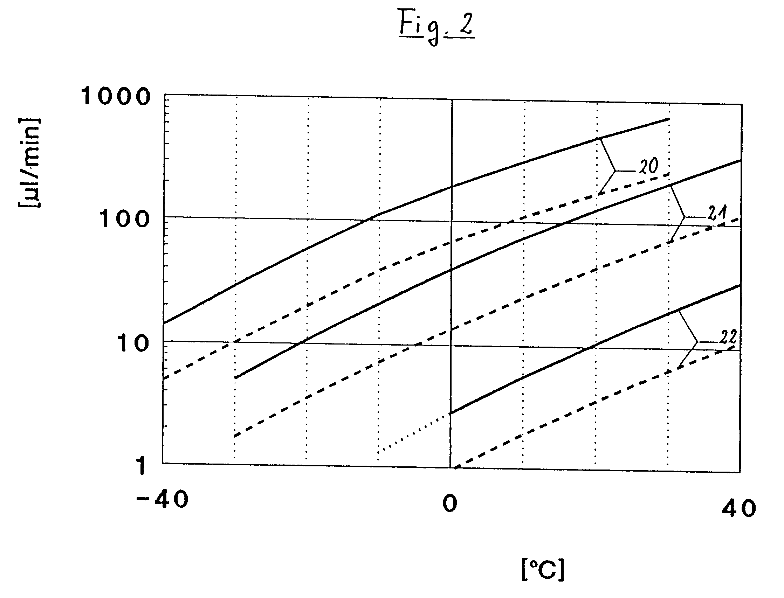

Fig. 2 zeigt als Beispiel ein Diagramm, bei dem auf der Ordinate die maximale Dosiergeschwindigkeit $v_{max}$ der aufzugebenden Probe logarithmisch und auf der Abszisse die Temperatur linear aufgetragen ist. Die Kurven 20 betreffen das Lösungsmittel Hexan, die Kurven 21 Methanol und die Kurven 22 Wasser, wobei die durchgezogenen Kurven bei einem Trägergasdurchsatz von 620 cm³/min und die gestrichelten Kurven bei 210 cm³/min aufgetragen sind.

Um am Ende der Probenaufgabe feststellen zu können, ob noch Lösungsmittel ausgeblendet wird, ist es zweckmäßig, auslaßseitig zum Verdampferrohr 18 einen auf das Lösungsmittel ansprechenden Detektor 23 vorzusehen, der mit einer im Regler 17 intergrierten oder getrennt ausgebildeten Umschalteinrichtung gekoppelt sein kann, um eine Umschaltung vom ersten Betriebszustand der Probenaufgabe mit Lösungsmittelausblendung auf den zweiten Betriebszustand der Aufgabe der zu untersuchenden Substanzen auf die Trennsäule 9 zu bewirken, wenn ein vorgegebener Schwellenwert unterschritten wird. Insbesondere eignet sich hierzu ein Wärmeleitfähigkeitsdetektor, der als Mikrobauelement in dem Verdampferrohr 18 angeordnet werden kann.

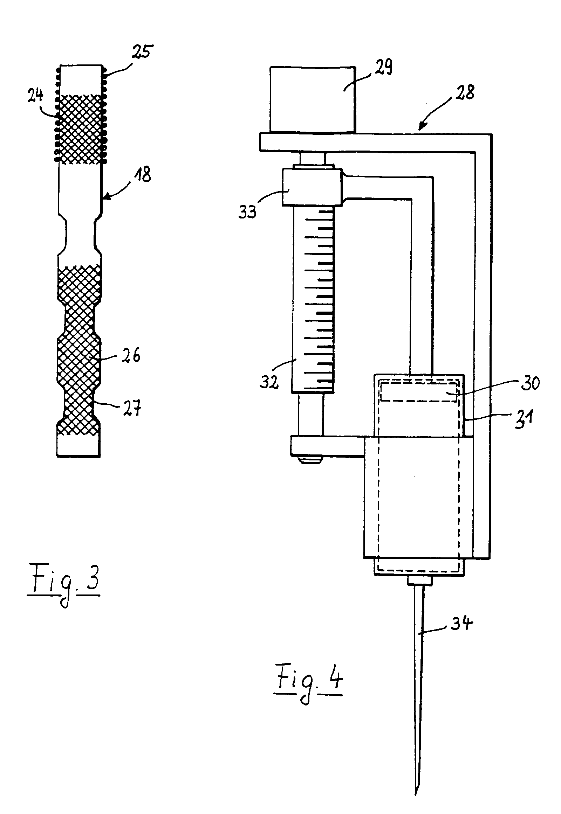

Fig. 3 zeigt eine Ausführungsform eines Verdampferrohrs 18, das im einlaßseitigen Bereich mit einer die Verdampfungsfläche für das Lösungsmittel vergrößernden Füllung 24 beispielsweise aus silanisierter Glaswolle versehen ist. Die Füllung 24 sollte durch das Lösungsmittel gut benetzbar sein. Hierdurch wird eine schnelle Verdampfung gefördert.

Eine zusätzliche partielle Widerstandsheizung 25 im einlaßseitigen Bereich des Verdampferrohrs 18 kann die Verdampfung des Lösungsmittels zusätzlich beschleunigen bzw. läßt sich hierdurch erreichen, daß das Lösungsmittel bereits in diesem mit der zusätzlichen Widerstandsheizung 25 versehenen einlaßseitigen Bereich des Verdampferrohrs 18 gänzlich verdampft wird, um im verdampften Zustand mit dem Spülgas und den zu untersuchenden Substanzen in den nachfolgenden kälteren Bereich des Verdampferrohrs zu gelangen, wo die zu untersuchenden Substanzen zurückgehalten werden. Dies ist insbesondere bei Wasser als Lösungsmittel zweckmäßig, um ein effektives Zurückhalten der zu untersuchenden Substanzen im Verdampferrohr 18 bewirken zu können.

Wie bereits erwähnt, können sich bei entsprechendem Siedepunktunterschied die zu untersuchenden Substanzen auf der Innenwandung des Verdampferrohrs 18 niederschlagen und/oder von einer auf der Innenwandung bzw. einer Füllung 26 befindlichen selektiven Phase zurückgehalten werden. Als selektive Phasen kommen beispielsweise solche vom Kohlenstofftyp (z.B. Aktivkohle etc.) vom Polymertyp (selektive Polymere), Molekularsiebe, mit flüssiger Phase benetztes feinkörniges Trägermaterial o.dgl. infrage. Die selektive Phase kann auf die Innenwandung des Verdampferrohrs 18 bzw. die Füllung 26 aufgedampft sein oder letztere bilden.

Außerdem kann das Verdampferrohr 18 mit nach innen gerichteten Verwirbelungsvorsprüngen 27 etwa in Form von nuppenförmigen Eindrückungen in dem Bereich versehen sein, der von der Injektionsnadel für die Probenaufgabe nicht erreicht wird. Die Verwirbelungsvorsprünge 27 sind vorzugsweise in regelmäßiger Anordnung angebracht und erhöhen die Verweilzeit des Probenmaterials im Verdampferrohr 18. Das Verdampferrohr 18 kann auch eine oder mehrere nach aussen gerichtete, gegebenenfalls ringförmige Aufweitungen aufweisen.

Das Verdampferrohr 18 hat ein beschränktes, vorbestimmtes Volumen und eine geringe Wärmeaufnahmekapazität, um ein sehr schnelles Aufheizen zu ermöglichen, um Chromatogramme mit hohem Auflösungsvermögen zu gewährleisten.

Fig. 4 zeigt eine Spritzenpumpe 28 für die Dosiereinrichtung 3, umfassend einen steuerbaren Schrittmotor 29, mit dem ein Kolben 30 in einem Spritzenzylinder 31 über eine Spindel 32 und eine Spindelmutter 33 gekoppelt ist, so daß das im Spritzenzylinder 31 befindliche Probenmaterial durch entsprechende Steuerung des Schrittmotors 29 durch den Kolben 30 über eine in das Verdampferrohr 18 ragende Injektionsnadel 34 mit einer etwa vom Regler 17 bestimmten Dosiergeschwindigkeit aufgebbar ist.

Es ist auch vorteilhafterweise eine Kombination mit einem Flüssigkeitschromatographen möglich, der üblicherweise mit viel Lösungsmittel arbeitet und dessen Split zum Befüllen der Dosiereinrichtung 3 direkt verwendet werden kann, so daß dieser Split kontinuierlich oder diskontinuierlich aufgegeben wird. In diesem Fall kann die Dosiergeschwindigkeit vom Flüssigkeitschromatographen bei direkter Kopplung vorgeben werden, wobei dann die Trägergasmenge/Zeiteinheit über den Strömungsregler und/oder die Temperatur durch den Regler 17 geregelt werden kann, um eine optimale Probenzugabe zu erreichen.

Als Lösungsmittel kann hierbei auch überkritisches $CO_2$ verwendet werden, da es nicht auf die Trennsäule 11 gelangt, sondern ausgeblendet wird, so daß eine Kopplung mit einer SFC- oder SFE-Einrichtung möglich ist.

Zweckmäßigerweise weist der Regler 17 einen Speicher für den Gefrier- und den Siedepunkt sowie eine Kurvenschar für mindestens ein Lösungsmittel entsprechend den Kurvenscharen von Fig. 2 oder ein Programm zur Berechnung mindestens einer derartigen Kurvenschar auf. Dann genügt es, wenn der Anwender das Lösungsmittel und die Aufgabemenge vorgibt. Der Regler 17 wird zweckmäßigerweise so programmiert, daß er einen Temperatursollwert auswählt, der - entsprechend den apparativen Gegebenheiten bezüglich Kühlmöglichkeit etwa durch Peltierelemente, flüssigen Stickstoff o.dgl. - möglichst nahe zum Gefrierpunkt des vorgegebenen Lösungsmittels liegt, damit aufgegebenes Lösungsmittel nicht schlagartig verdampft, wie es bei einer Temperatur in der Nähe des Siedepunktes der Fall wäre, sich aber auch nicht als Feststoff niederschlägt. Diese Temperatureinstellung wird über den Temperaturmeßfühler 16 und die entsprechend vom Regler 17 gesteuerte Kühl- und Heizeinrichtung 19 eingestellt.

Hierzu wählt der Regler 17 zweckmäßigerweise einen möglichst hohen Durchflußsollwert von Trägergasmenge/Zeiteinheit, da bei niedrigerer Temperatur die Verdampfung entsprechend gering ist und möglichst viel Lösungsmittel pro Zeiteinheit verdampft werden sollte. Wenn zwei Größen auf diese Weise ausgewählt werden, kann der Sollwert für die dritte, die Aufgabegeschwindigkeit des Probenmaterials, hieraus derart bestimmt werden, daß sich hierfür ein optimaler Wert knapp unterhalb der entsprechenden Kurve, wie sie in Fig. 2 beispielhaft für mehrere Lösungsmittel dargestellt ist, berechnet und mittels des Reglers 17 eingeregelt werden, ohne daß es besonderer Überlegungen des Anwenders bedürfte.

Aber auch wenn der Anwender einen weiteren Parameter vorgibt, können die beiden verbleibenden durch den Regler 17 entsprechend den vorstehenden Ausführungen ausgewählt bzw. berechnet und eingeregelt werden.

Für die Temperaturmessung durch den Temperaturfühler 16 kann eine berührungslose Messung der Innentemperatur des Verdampferrohrs 18 etwa über einen Infrarotsensor (Pyrometer) vorgesehen sein. Stattdessen kann aber auch die Außentemperatur des Verdampferrohrs 18 gemessen werden, aus der dann die Innentemperatur als - gegebenenfalls empirisch bestimmte - Funktion der Außentemperatur und der Durchflußmenge des Trägergases berechnet werden. Gegebenenfalls ist hierbei auch noch die Verdampfungsenthalpie zu berücksichtigen, wenn sie hinreichend groß und damit nicht vernachlässigbar ist.

Bei Kapillarsäulen 9 mit sehr geringem Durchmesser ist es zweckmäßig der Aufgabeeinrichtung 1 eine Fokussierungseinrichtung nachzuschalten, um zu breite Eingangspeaks zu vermeiden. Hierbei kann es sich beispielsweise um eine spezielle Phase z.B. im Säulenanfang oder eine Kältefalle, letztere etwa realisiert durch eine Kühlung des Säulenanfangs beispielsweise durch Flüssiggas, handeln, wo die aus der Aufgabeeinrichtung 1 nach dem Ausblenden des Lösungsmittels zugeführten zu untersuchenden Substanzen zunächst zurückgehalten werden, um dann durch schnelles Hochheizen unter Ausbildung von kleinen Peakbreiten freigegeben zu werden.

**Patentansprüche**

1. Verfahren zur gaschromatographischen Trennung von Substanzen, wobei ein geregelter Spülgasstrom durch eine ein Verdampferrohr aufweisende Probenaufgabeeinrichtung geführt wird, wobei in einem ersten Betriebszustand eine Aufgabe des aus Lösungsmittel und zu untersuchenden Substanzen bestehenden, flüssigen Probenmaterials erfolgt, während der Zugang zur Trennsäule blockiert und der Spülgasstrom zusammen mit dem verdampften Lösungsmittel abgeführt wird sowie zu untersuchende Substanzen in dem Verdampferrohr zurückgehalten werden, und wobei in einem zweiten Betriebszustand, in dem der Zugang zur Trennsäule offen ist, mittels eines Trägergases die während des ersten Betriebszustands zurückgehaltenen Substanzen des Probenmaterials durch Erwärmen des Verdampferrohrs der Trennsäule zugeführt werden, dadurch **gekennzeichnet,** daß wenigstens eine der drei Größen Dosiergeschwindigkeit des Probenmaterials, Temperatur im Verdampferrohr und das Verdampferrohr durchströmende Spülgasmenge pro Zeiteinheit in Abhängigkeit von der oder den anderen derart geregelt wird, daß sämtliches Lösungsmittel im Verdampferrohr verdampft und der abgeführte Spülgasstrom praktisch mit Lösungsmitteldampf gesättigt wird.

2. Verfahren nach Anspruch 1, dadurch gekennzeichnet, daß die Aufgabe einer großen Menge des Probenmaterials kontinuierlich über einen längeren Zeitraum hinweg vorgenommen wird.

3. Verfahren nach Anspruch 1 oder 2, dadurch gekennzeichnet, daß das Probenmaterial durch Regelung der Dosiergeschwindigkeit des Probenmaterials entsprechend der Temperatur im Verdampferrohr bei voreingestellter Spülgasmenge/Zeiteinheit aufgegeben wird.

4. Verfahren nach einem der Ansprüche 1 bis 3, dadurch gekennzeichnet, daß die Dosiergeschwindigkeit in bezug auf einen oberen Grenzwert $v_{max}$ entsprechend

$$v_{max} = \frac{p_o}{p_i} \cdot \frac{Mp_j}{dRT_o} \cdot v_{t,o}$$

geregelt wird, wobei $p_o/p_i$ das Auslaß-/Einlaßdruckverhältnis am Verdampferrohr, M das Molekulargewicht, $p_j$ der Partialdruck und d die Dichte des Lösungsmittels, R die Gaskonstante, $T_o$ die Temperatur am Auslaß des Verdampferrohrs und $v_{t,o}$ die Gesamtgasdurchflußrate am Auslaß des Verdampferrohrs ist.

5. Verfahren nach Anspruch 1 oder 2, dadurch gekennzeichnet, daß die Dosiergeschwindigkeit konstant gehalten und die Temperatur im Verdampferrohr bei voreingestellter Spülgasmenge/Zeiteinheit geregelt wird.

6. Verfahren nach einem der Ansprüche 1 bis 5, dadurch gekennzeichnet, daß das Probenmaterial in Form eines Splits eines Flüssigkeitschromatographen aufgegeben wird.

7. Verfahren nach einem der Ansprüche 1 bis 6, dadurch gekennzeichnet, daß als Lösungsmittel überkritisches Kohlendioxid verwendet wird.

8. Verfahren nach einem der Ansprüche 1 bis 7, dadurch gekennzeichnet, daß bei vorgegebenem Lösungsmittel die gesamte Aufgabemenge des Probenmaterials vorgegeben und automatisch mindestens ein Sollwert für eine der drei Größen zur zeitlich möglichst optimalen Probenaufgabe bestimmt und eingeregelt wird.

9. Verfahren nach Anspruch 8, dadurch gekennzeichnet, daß bei sehr geringen Konzentrationen von zu untersuchenden Substanzen im Lösungsmittel und/oder bei einer geringen Siedepunktsdifferenz von Lösungsmittel und zu untersuchenden Substanzen ein Sollwert für die Temperatur im Verdampferrohr im Temperaturregelbereich nahe zum Gefrierpunkt des Lösungsmittels ausgewählt wird.

10. Verfahren nach Anspruch 8 oder 9, dadurch gekennzeichnet, daß automatisch ein Sollwert für die Trägergasmenge/Zeiteinheit am oberen Ende des zugehörigen Regelbereichs ausgewählt und die Dosiergeschwindigkeit in Abhängigkeit hiervon und von der Temperatur im Verdampferrohr eingestellt wird.

11. Verfahren nach einem der Ansprüche 1 bis 10, dadurch gekennzeichnet, daß die Messung der Temperatur im Verdampferrohr berührungslos vorgenommen wird.

12. Verfahren nach einem der Ansprüche 1 bis 10, dadurch gekennzeichnet, daß die Außentemperatur des Verdampferrohrs gemessen und dessen Innentemperatur als Funktion der gemessenen Außentemperatur und der das Verdampferrohr durchströmenden Trägergasmenge/Zeiteinheit berechnet wird.

13. Verfahren nach einem der Ansprüche 1 bis 12, dadurch gekennzeichnet, daß am Ende der Aufgabe des Probenmaterials das Zuführen der im Verdampferrohr zurückgehaltenen Substanzen zur Trennsäule ausgelöst wird, wenn der im Spülgas enthaltene Anteil an Lösungsmittel unter einen vorgegebenen Schwellenwert gesunken ist.

14. Verfahren nach Anspruch 13, dadurch gekennzeichnet, daß der im Spülgas enthaltene Anteil an Lösungsmittel über eine Wärmeleitfähigkeitsmessung bestimmt wird.

15. Verfahren nach einem der Ansprüche 1 bis 14, dadurch gekennzeichnet, daß das Probenmaterial durch Wärmezufuhr zum eintrittsseitigen Bereich des Verdampferrohrs bereits in diesem verdampft wird, während der übrige Bereich des Verdampferrohrs kühl gehalten wird.

16. Vorrichtung zur gaschromatographischen Trennung von Substanzen mittels einer Trennsäule (9), wobei ein geregelter Spülgasstrom durch eine ein heiz- und kühlbares Verdampferrohr (18) aufweisende Probenaufgabeeinrichtung (1) führbar und zwischen einem ersten Betriebszustand, in dem eine Aufgabe des aus Lösungsmittel und zu untersuchenden Substanzen bestehenden, flüssigen Probenmaterials erfolgt, während der Zugang zur Trennsäule (9) blockiert und der Spülgasstrom zusammen mit dem Lösungsmittel durch eine geöffnete Abführleitung (11) abgeführt wird sowie zu untersuchende Substanzen in dem vor der Trennsäule (9) befindlichen Verdampferrohr (18) zurückgehalten werden, und einem zweiten Betriebszustand umschaltbar ist, in dem die Abführleitung (11) für den Spülgasstrom geschlossen und der Zugang zur Trennsäule (9) offen ist, mittels eines Trägergases die während des ersten Betriebszustands zurückgehaltenen Substanzen des Probenmaterials durch Erwärmen des Verdampferrohrs (18) der Trennsäule (9) zugeführt werden, dadurch **gekennzeichnet**, daß ein Regler (17) vorgesehen ist, der wenigstens eine der drei Größen Dosiergeschwindigkeit des Probenmaterials, Temperatur im Verdampferrohr (18) und das Verdampferrohr (18) durchströmende Spülgasmenge/Zeiteinheit in Abhängigkeit von der oder den anderen derart regelt, daß sämtliches Lösungsmittel im Verdampferrohr (18) verdampft und mit dem mit Lösungsmitteldampf im wesentlichen gesättigten Spülgasstrom während des ersten Betriebszustands abgeführt wird, und daß ein mit dem Regler (17) gekoppelter Meßfühler (16) für die Temperatur im Verdampferrohr (18), eine mit dem Regler (17) gekoppelte Dosiereinrichtung (3) für das Aufgabematerial, gegebenenfalls ein mit dem Regler (17) gekoppelter Durchflußregler (6) in der Zuführleitung (5) zum Verdampferrohr (18) und gegebenenfalls eine mit dem Regler (17) gekoppelte Heiz- und Kühleinrichtung (19) für das Verdampferrohr (18) vorgesehen sind.

17. Vorrichtung nach Anspruch 16, dadurch gekennzeichnet, daß die Dosiergeschwindigkeit der Dosiervorrichtung (3) durch den Regler (17) regelbar ist.

18. Vorrichtung nach Anspruch 16 oder 17, dadurch gekennzeichnet, daß die Temperatur im Verdampferrohr (18) durch den Regler (17) regelbar ist.

19. Vorrichtung nach einem der Ansprüche 16 bis 18, dadurch gekennzeichnet, daß der Regler (17) einen Speicher oder eine Recheneinheit für eine Kurvenschar (20, 21, 22) bezüglich der Dosiergeschwindigkeit des Probenmaterials gegenüber der Temperatur im Verdampferrohr (18) in Abhängigkeit von der Spülgasmenge/Zeiteinheit für mindestens ein Lösungsmittel beinhaltet.

20. Vorrichtung nach einem der Ansprüche 16 bis 19, dadurch gekennzeichnet, daß der Regler (17) derart programmiert ist, daß er nach Vorgabe der gesamten Aufgabemenge des Probenmaterials entsprechend dem Lösungsmittel mindestens einen Sollwert für eine der drei Größen zur zeitlich optimalen Probenaufgabe selbsttätig bestimmt.

21. Vorrichtung nach Anspruch 20, dadurch gekennzeichnet, daß der Regler (17) den Sollwert für die Temperatur im Verdampferrohr (18) im Temperaturregelbereich der Heiz- und Kühleinrichtung (19) nahe zum Gefrierpunkt des Lösungsmittels bestimmt.

22. Vorrichtung nach Anspruch 20 oder 21, dadurch gekennzeichnet, daß der Regler (17) einen Sollwert für die Spülgasmenge/Zeiteinheit am oberen Ende des zugehörigen Regelbereichs des Strömungsreglers (6) bestimmt.

23. Vorrichtung nach einem der Ansprüche 16 bis 22, dadurch gekennzeichnet, daß ein Meßfühler (16) zum berührungslosen Messen der Innentemperatur des Verdampferrohrs (18) vorgesehen ist.

24. Vorrichtung nach einem der Ansprüche 16 bis 22, dadurch gekennzeichnet, daß ein Meßfühler (16) für die Außentemperatur des Verdampferrohrs (18) und eine damit gekoppelte Recheneinheit zum Bestimmen der Innentemperatur des Verdampferrohrs (18) als Funktion der Außentemperatur und der Spülgasmenge/Zeiteinheit vorgesehen sind.

25. Vorrichtung nach einem der Ansprüche 16 bis 24, dadurch gekennzeichnet, daß am Ende des Verdampferrohrs (18) ein auf Lösungsmittel ansprechender Detektor (23) vorgesehen ist, dessen Signal bei Unterschreiten eines Schwellenwertes ein Umschalten vom ersten in den zweiten Betriebszustand bewirkt.

26. Vorrichtung nach Anspruch 25, dadurch gekennzeichnet, daß der Detektor (23) ein Wärmeleitfähigkeitsdetektor ist.

27. Vorrichtung nach einem der Ansprüche 16 bis 26, dadurch gekennzeichnet, daß das Verdampferrohr (18) im einlaßseitigen Bereich eine die Verdampfungsfläche für das Lösungsmittel vergrößernde Füllung (24) aufweist.

28. Vorrichtung nach einem der Ansprüche 16 bis 27, dadurch gekennzeichnet, daß das Verdampferrohr (18) im einlaßseitigen Bereich eine Zusatzheizung (25) aufweist.

29. Vorrichtung nach einem der Ansprüche 16 bis 28, dadurch gekennzeichnet, daß das Verdampferrohr (18) eine selektive Füllung (26) aufweist.

30. Vorrichtung nach Anspruch 29, dadurch gekennzeichnet, daß die Füllung (26) aus Trägermaterial mit einer darauf befindlichen selektiven Phase besteht.

31. Vorrichtung nach einem der Ansprüche 16 bis 30, dadurch gekennzeichnet, daß das Verdampferrohr (18) mit einer auf seine Innenwandung aufgedampften selektiven Phase versehen ist.

32. Vorrichtung nach einem der Ansprüche 16 bis 31, dadurch gekennzeichnet, daß das Verdampferrohr (18) mit einwärts gerichteten Verwirbelungsvorsprüngen (27) versehen ist.

33. Vorrichtung nach einem der Ansprüche 16 bis 32, dadurch gekennzeichnet, daß die Dosiereinrichtung (3) eine Spritzenpumpe (28) mit einem über einen steuerbaren Schrittmotor (29) verstellbaren Kolben (30) ist.

34. Vorrichtung nach einem der Ansprüche 16 bis 33, dadurch gekennzeichnet, daß die Dosiereinrichtung (3) mit einem Splitausgang eines Flüssigkeitschromatographen direkt gekoppelt ist.

35. Vorrichtung nach einem der Ansprüche 16 bis 34, dadurch gekennzeichnet, daß der Probenaufgabeeinrichtung (1) eine Fokussierungseinrichtung für die zu untersuchenden Substanzen nachgeschaltet ist.

## Claims

1. Method for the gas-chromatographic separation of substances, in which a controlled flushing gas stream is passed through a sample application device having an evaporator tube, in which, in a first operating state, an application of the liquid sample material composed of solvent and substances to be investigated is carried out, while the access to a separating column is cut off and the flushing gas stream is removed together with the solvent evaporated, and substances to be investigated are retained in the evaporator tube, and in which, in a second operating state in which the access to the separating column is open, those substances in the sample material retained during the first operating state are fed to the separating column by means of a carrier gas as a result of heating the evaporator tube, characterized in that at least one of the three variables comprising injection rate of the sample material, temperature in the evaporator tube and the amount of flushing gas flowing through the evaporator tube in unit time, is controlled as a function of the other or the others in such a way that all the solvent in the evaporator tube is evaporated and the flushing gas removed is virtually saturated with solvent vapour.

2. Method according to Claim 1, characterized in that the application of a large amount of the sample material is carried out continuously over a prolonged period of time.

3. Method according to Claim 1 or 2, characterized in that the sample material is applied by controlling the injection rate of the sample material in accordance with the temperature in the evaporator tube, with a preset amount of flushing gas/unit time.

4. Method according to one of Claims 1 to 3, characterized in that the injection rate is controlled with respect to an upper limit value $v_{max}$ in accordance with

$$V_G = \frac{V_L d}{M} \cdot \frac{RT}{p_j}$$

where $p_o/p_i$ is the outlet/inlet pressure ratio at the evaporator tube, M is the molecular weight, $p_j$ is the partial pressure and d is the density of the solvent, R is the gas constant, $T_o$ is the temperature at the outlet of the evaporator tube and $v_{t,o}$ is the total gas flow rate at the outlet of the evaporator tube.

5. Method according to Claim 1 or 2, characterized in that the injection rate is kept constant and the temperature in the evaporator tube is controlled, with a preset amount of flushing gas/unit time.

6. Method according to one of Claims 1 to 5, characterized in that the sample material is applied in the form of a liquid-chromatograph split.

7. Method according to one of Claims 1 to 6, characterized in that supercritical carbon dioxide is used as solvent.

8. Method according to one of Claims 1 to 7, characterized in that, for a given solvent, the entire amount of the sample material applied is injected and at least one set-point value for one of the three variables is automatically determined and adjusted for the sample application which is as optimal with respect to time as possible.

9. Method according to Claim 8, characterized in that, for very low concentrations of substances to be investigated in the solvent and/or with a small boiling-point difference between solvent and substances to be investigated, a set-point value for the temperature in the evaporator tube is selected near the freezing point of the solvent in the temperature-control range.

10. Method according to Claim 8 or 9, characterized in that a set-point value for the amount of carrier gas/unit time is automatically selected at the upper end of the associated control range and the injection rate is adjusted as a function thereof and of the temperature in the evaporator tube.

11. Method according to one of Claims 1 to 10, characterized in that the measurement of the temperature in the evaporator tube is carried out in a contact-free manner.

12. Method according to one of Claims 1 to 10, characterized in that the external temperature of the evaporator tube is measured and its internal temperature is calculated as a function of the measured external temperature and the amount of carrier gas/unit time flowing through the evaporator tube.

13. Method according to one of Claims 1 to 12, characterized in that, at the end of the application of the sample material, the supply of the substances retained in the evaporator tube to the separating column is initiated if the proportion of solvent contained in the flushing gas has dropped below a given threshold value.

14. Method according to Claim 13, characterized in that the proportion of solvent contained in the flushing gas is determined by means of a thermal conductivity measurement.

15. Method according to one of Claims 1 to 14, characterized in that the sample material is evaporated in the inlet-side region of the evaporator tube by supplying heat to the latter, while the remaining region of the evaporator tube is kept cool.

16. Apparatus for the gas-chromatographic separation of substances by means of a separating column (9), in which a controlled flushing gas stream can be passed through a sample application device (1) having a heatable and coolable evaporator tube (18) and can be switched between a first operating state, in which an application of the liquid sample material composed of solvent and substances to be investigated is carried out while the access to a separating column (9) is cut off and the flushing gas stream is removed together with the solvent through an open drain line (11) and substances to be investigated are retained in the evaporator tube (18) situated upstream of the separating column (9), and a second operating state in which the drain line (11) for the flushing gas stream is closed and the access to the separating column (9) is open, and those substances in the sample material retained during the first operating state are fed to the separating column (9) by means of a carrier gas as a result of heating the evaporator tube (18), characterized in that a controller (17) is provided which controls at least one of the three variables comprising injection rate of the sample material, temperature in the evaporator tube (18) and amount of flushing gas/unit time flowing through the evaporator tube (18), as a function of the other or the others in such a way that all the solvent in the evaporator tube (18) is evaporated and is removed during the first operating state with the flushing gas stream, which is essentially saturated with solvent vapour, and in that a temperature measuring sensor (16), coupled to the controller (17) in the evaporator tube (18), an injection device (3), coupled to the controller (17), for the material applied, optionally a flow controller (6), coupled to the controller (17), in the supply line (5) to the evaporator tube (18) and, optionally, a heating and cooling device (19), coupled to the controller (17), for the evaporator tube (18) are provided.

17. Apparatus according to Claim 16, characterized in that the injection rate of the injection device (3) can be controlled by the controller (17).

18. Apparatus according to Claim 16 or 17, characterized in that the temperature in the evaporator tube (18) can be controlled by the controller (17).

19. Apparatus according to one of Claims 16 to 18, characterized in that the controller (17) comprises a memory or an arithmetic unit for a family or curves (20, 21, 22) for the injection rate of the sample material against the temperature in the evaporator tube (18) as a function of the amount of flushing gas/unit time for at least one solvent.

20. Apparatus according to one of Claims 16 to 19, characterized in that the controller (17) is programmed so that, after injection of the entire amount of sample material applied, it automatically determines at least one set-point value for one of the three variables in accordance with the solvent for the sample application which is as optimal with respect to time as possible.

21. Apparatus according to Claim 20, characterized in that the controller (17) determines the set-point value for the temperature in the evaporator tube (18) near the freezing point of the solvent in the temperature-control range of the heating and cooling device (19).

22. Device according to Claim 20 or 21, characterized in that the controller (17) determines a set-point value for the amount of flushing gas/unit time at the upper end of the associated control range of the flow controller (6).

23. Apparatus according to one of Claims 16 to 22, characterized in that a measuring sensor (16) is provided for the contact-free measurement of the internal temperature of the evaporator tube (18).

24. Apparatus according to one of Claims 16 to 22, characterized in that a measuring sensor (15) is provided for the external temperature of the evaporator tube (18) and an arithmetic unit, coupled thereto, is provided for determining the internal temperature of the evaporator tube (18) as a function of the external temperature and of the amount of flushing gas/unit time.

25. Apparatus according to one of Claims 16 to 24, characterized in that, at the end of the evaporator tube (18) there is provided a detector (23) which responds to solvent and whose signal brings about a switch-over from the first to the second operating state on dropping below a threshold value.

26. Apparatus according to Claim 25, characterized in that the detector (23) is a thermal conductivity detector.

27. Apparatus according to one of Claims 16 to 26, characterized in that the evaporator tube (18) has a packing (24) which increases the evaporation area for the solvent in the inlet-side region.

28. Apparatus according to one of Claims 16 to 27, characterized in that the evaporator tube (18) has an additional heating system (25) in the inlet-side region.

29. Apparatus according to one of Claims 16 to 28, characterized in that the evaporator tube (18) contains a selective packing (26).

30. Apparatus according to Claim 29, characterized in that the packing (26) is composed of support material with a selective phase situated thereon.

31. Apparatus according to one of Claims 16 to 30, characterized in that the evaporator tube (18) is provided with a selective phase, vapour-deposited on its inner wall.

32. Apparatus according to one of Claims 16 to 31, characterized in that the evaporator tube (18) is provided with inwardly directed turbulence projections (27).

33. Apparatus according to one of Claims 16 to 32, characterized in that the injection device (3) is a syringe pump (28) having a plunger (30) which can be displaced by means of a controllable stepping motor (29).

34. Apparatus according to one of Claims 16 to 33, characterized in that the injection device (3) is directly coupled to a liquid-chromatograph split outlet.

35. Apparatus according to one of Claims 16 to 34, characterized in that a focusing device for the substances to be investigated is inserted downstream of the sample application device (1).

**Revendications**

1. Procédé de séparation de substances par chromatographie en phase gazeuse, dans lequel un flux régulé de gaz de lavage traverse un dispositif de chargement d'échantillons muni d'un tube d'évaporation dans lequel a lieu, dans un premier mode de fonctionnement, une charge d'échantillon liquide constitué d'un solvant et des substances à déterminer, pendant que l'accès à la colonne de séparation est bloqué et que le flux de gaz de lavage est évacué en même temps que le solvant vaporisé et que les substances à déterminer sont retenues dans le tube d'évaporation et, dans un second mode de fonctionnement pendant lequel l'accès à la colonne de séparation est ouvert, les substances de l'échantillon retenues pendant le premier mode de fonctionnement sont amenées à la colonne de séparation au moyen d'un gaz porteur, par le réchauffement du tube d'évaporation, caractérisé en ce qu'au moins l'une des trois grandeurs, à savoir la vitesse de dosage de l'échantillon, la température régnant dans le tube d'évaporation et la quantité de gaz de lavage traversant ce tube par unité de temps, est régulée en fonction de l'une ou des deux autres de ces grandeurs de telle sorte que la totalité du solvant s'évapore dans le tube d'évaporation et que le flux de gaz de lavage évacué est pratiquement saturé de vapeur de solvant.

2. Procédé selon la revendication 1, caractérisé en ce que le chargement d'une grande quantité d'échantillon s'effectue de manière continue sur un laps de temps relativement long.

3. Procédé selon la revendication 1 ou 2, caractérisé en ce que le chargement de l'échantillon s'effectue par réglage de la vitesse de dosage de celui-ci en fonction de la température dans le tube d'évaporation après réglage préalable de la quantité de gaz de lavage par unité de temps.

4. Procédé selon l'une des revendications 1 à 3, caractérisé en ce que la vitesse de dosage est réglée par rapport à une valeur limite supérieure $V_{max}$ donnée par la relation suivante :

$$V_{max} = \frac{p_o}{p_i} \cdot \frac{Mp_j}{dRT_o} \cdot v_{t,o}$$

dans laquelle $p_o/p_i$ est le rapport entre la pression de sortie et la pression d'entrée du tube d'évaporation, M est la masse molaire, $p_j$ est la pression partielle et d est la densité du solvant, R est la constante des gaz parfaits, $T_o$ est la température à la sortie du tube d'évaporation et $v_{t,o}$ le débit gazeux total à la sortie du tube d'évaporation.

5. Procédé selon la revendication 1 ou 2, caractérisé en ce que la vitesse de dosage est maintenue constante et la température dans le tube d'évaporation est régulée par réglage préalable de la quantité de gaz de lavage par unité de temps.

6. Procédé selon l'une des revendications 1 à 5, caractérisé en ce que l'échantillon est chargé sous la forme d'une fraction d'un chromatographe en phase liquide.

7. Procédé selon l'une des revendications 1 à 6, caractérisé en ce que l'on utilise comme solvant du dioxyde de carbone surcritique.

8. Procédé selon l'une des revendications 1 à 7, caractérisé en ce que le solvant ayant été prédéfini, on prédétermine la quantité totale d'échantillon à charger et on détermine et prend en compte automatiquement au moins une valeur nominale pour l'une des trois grandeurs, correspondant à un temps de charge de la matière le meilleur possible.

9. Procédé selon la revendication 8, caractérisé en ce que si les substances à déterminer sont en concentrations très faibles dans le solvant, et/ou si la différence entre le point d'ébullition du solvant et celui des substances à déterminer est très faible, on choisit, pour la température dans le tube d'évaporation, une valeur nominale proche du point de congélation du solvant.

10. Procédé selon la revendication 8 ou 9, caractérisé en ce que, pour le rapport quantité de gaz porteur par unité de temps, on choisit automatiquement une valeur nominale située à l'extrémité supérieure de la plage de réglage correspondante et la vitesse de dosage est réglée en fonction de cette valeur nominale et de la température qui règne dans le tube d'évaporation.

11. Procédé selon l'une des revendications 1 à 10, caractérisé en ce que la mesure de la température dans le tube d'évaporation s'effectue sans contact.

12. Procédé selon l'une des revendications 1 à 10, caractérisé en ce que la température extérieure du tube d'évaporation est mesurée et sa température intérieure est calculée en fonction de la température extérieure mesurée et du flux par unité de temps du gaz porteur à travers le tube d'évaporation.

13. Procédé selon l'une des revendications 1 à 12, caractérisé en ce que, à la fin du chargement de l'échantillon, est déclenché le passage des substances retenues dans le tube d'évaporation vers la colonne de séparation, lorsque la part de solvant contenue dans le gaz de lavage est descendue au-dessous d'une valeur limite prédéterminée.

14. Procédé selon la revendication 13, caractérisé en ce que la part de solvant contenue dans le gaz de lavage est déterminée par une mesure de conductibilité thermique.

15. Procédé selon l'une des revendications 1 à 14, caractérisé en ce que, par apport de chaleur dans la zone d'entrée du tube d'évaporation, l'échantillon est déjà évaporé à l'intérieur de celui-ci, tandis que la partie restante du tube d'évaporation est maintenue froide.

16. Dispositif pour la séparation de substances par chromatographie en phase gazeuse au moyen d'une colonne de séparation (9), dans lequel un flux régulé de gaz de lavago peut traverser un dispositif de chargement d'échantillons (1) présentant un tube d'évaporation (18) chauffable et refroidissable, pouvant opérer dans un premier mode de fonctionnement, dans lequel a lieu une charge d'échantillon liquide constitué de solvant et des substances à déterminer, pendant que l'accès à la colonne de séparation (9) est bloqué et que le flux de gaz de lavage est évacué avec le solvant par une conduite d'évacuation ouverte (11) et que les substances à déterminer sont retenues dans le tube d'évaporation (18) disposé en amont de la colonne de séparation (9), et dans un second mode de fonctionnement, dans lequel la conduite d'évacuation (11) du flux de gaz porteur est fermée et l'accès à la colonne de séparation (9) est ouvert, les substances de l'échantillon retenues pendant le premier mode de fonctionnement étant amenées à la colonne de séparation (9) au moyen d'un gaz porteur, par le réchauffement du tube d'évaporation (18), caractérisé par un régulateur (17) qui régule au moins l'une des trois grandeurs, à savoir la vitesse de dosage de l'échantillon, la température régnant dans le tube d'évaporation (18) et le rapport entre la quantité par unité de temps de gaz de lavage traversant ledit tube (18), en fonction de l'une ou des deux autres de ces grandeurs, de telle sorte que la totalité du solvant s'évapore dans le tube d'évaporation (18) et est évacuée pendant le premier mode de fonctionnement, avec le flux de gaz de lavage pratiquement saturé en vapeur de solvant, et en ce qu'il comporte une sonde de mesure (16) couplée au régulateur (17) pour la mesure de la température dans le tube d'évaporation (18), un dispositif de dosage (3) couplé au régulateur (17) pour la matière à charger, éventuellement un régulateur de débit (6) couplé au régulateur (17) dans la conduite d'amenée (5) vers le tube d'évaporation (18), et éventuellement un dispositif de chauffage et de réfrigération (19) couplé au régulateur (17) pour le tube d'évaporation (18).

17. Dispositif selon la revendication 16, caractérisé en ce que la vitesse de dosage du dispositif de dosage (3) est réglable au moyen du régulateur (17).

18. Dispositif selon la revendication 16 ou 17, caractérisé en ce que la température qui règne dans le tube d'évaporation (18) est réglable au moyen du régulateur (17).

19. Dispositif selon l'une des revendications 16 à 18. caractérisé en ce que le régulateur (17) comporte une mémoire ou un calculateur pour une famille de courbes (20,21,22) relatives à la vitesse de dosage de l'échantillon par rapport à la température dans le tube d'évaporation (18), en fonction du rapport quantité de gaz de lavage par unité de temps, pour au moins un solvant.

20. Dispositif selon l'une des revendications 16 à 19, caractérisé en ce que le régulateur (17) est programmé de telle sorte qu'après prédétermination de la totalité de la quantité chargée d'échantillon, compte-tenu du solvant, il détermine automatiquement au moins une valeur nominale pour l'une des trois grandeurs en vue du chargement d'échantillon en un temps optimal.

21. Dispositif selon la revendication 20, caractérisé en ce que le régulateur (17) détermine la valeur nominale de la température dans le tube d'évaporation (18), dans la plage de températures du dispositif de chauffage et de réfrigération (19), proche du point de congélation du solvant.

22. Dispositif selon la revendication 20 ou 21, caractérisé en ce que le régulateur (17) détermine une valeur nominale pour le rapport quantité de gaz de lavage par unité de temps, située à l'extrémité supérieure de la plage de réglage correspondante du régulateur de débit (6).

23. Dispositif selon l'une des revendications 16 à 22, caractérisé en ce qu'il comporte une sonde de mesure (16) pour la mesure sans contact de la température intérieure du tube d'évaporation (18).

24. Dispositif selon l'une des revendications 16 à 22, caractérisé en ce qu'il comporte une sonde de mesure (16) de la température extérieure du tube d'évaporation (18) et un calculateur couplé à cette sonde pour déterminer la température intérieure du tube d'évaporation (18) en fonction de la température extérieure et du rapport quantité de gaz de lavage par unité de temps.

25. Dispositif selon l'une des revendications 16 à 24, caractérisé en ce qu'il comporte, à l'extrémité du tube d'évaporation (18), un détecteur (23) sensible au solvant, dont le signal provoque, en dessous d'une valeur limite, une commutation du premier au second mode de fonctionnement.

26. Dispositif selon la revendication 25, caractérisé en ce que le détecteur (23) est un détecteur de conductibilité thermique.

27. Dispositif selon l'une des revendications 16 à 26, caractérisé en ce que le tube d'évaporation (18) présente, au niveau de l'entrée, une garniture (24) augmentant la surface d'évaporation du solvant.

28. Dispositif selon l'une des revendications 16 à 27, caractérisé en ce que le tube d'évaporation (18) présente, au niveau de l'entrée, un chauffage complémentaire (25).

29. Dispositif selon l'une des revendications 16 à 28, caractérisé en ce que le tube d'évaporation (18) présente une garniture sélective (26).

30. Dispositif selon la revendication 29, caractérisé en ce que la garniture (26) est constituée d'un matériau support muni d'une phase sélective.

31. Dispositif selon l'une des revendications 16 à 30, caractérisé en ce que le tube d'évaporation (18) est muni d'une phase sélective appliquée par vaporisation sur sa paroi interne.

32. Dispositif selon l'une des revendications 16 à 31, caractérisé en ce que le tube d'évaporation (18) est muni de saillies de turbulence (27) orientées vers l'intérieur.

33. Dispositif selon l'une des revendications 16 à 32, caractérisé en ce que le dispositif de dosage (3) est une pompe d'injection (28) munie d'un piston (30) mobile au moyen d'un moteur pas à pas (29) régulable.

34. Dispositif selon l'une des revendications 16 à 33, caractérisé en ce que le dispositif de dosage (3) est directement couplé à une sortie de fraction d'un chromatographe en phase liquide.

35. Dispositif selon l'une des revendications 16 à 34, caractérisé en ce qu'il comporte, en aval du dispositif ce chargement (1) d'échantillon, un dispositif de concentration des substances à déterminer.

Fig. 1

Fig. 2

EP 0 451 566 B1

Fig. 3

Fig. 4

16